(19) Europäisches Patentamt
European Patent Office
Office européen des brevets

(11) **EP 3 107 262 B1**

(12) **EUROPEAN PATENT SPECIFICATION**

(45) Date of publication and mention
of the grant of the patent:
**17.01.2018 Bulletin 2018/03**

(51) Int Cl.:
**G06F 21/12** (2013.01)  **H04L 29/08** (2006.01)
**H04L 29/06** (2006.01)  **G06F 17/30** (2006.01)

(21) Application number: **16175306.6**

(22) Date of filing: **20.06.2016**

(54) **METHOD AND DEVICE FOR DETECTING WEBSITE HIJACKING**

VERFAHREN UND VORRICHTUNG ZUR DETEKTION VON WEBSITE-HIJACKING

PROCÉDÉ ET DISPOSITIF DE DÉTECTION DE DÉTOURNEMENT DE SITE WEB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2015 CN 201510347804**

(43) Date of publication of application:
**21.12.2016 Bulletin 2016/51**

(73) Proprietor: **Xiaomi Inc.
Beijing 100085 (CN)**

(72) Inventors:
• **YU, Yifei
Haidian District Beijing 100085 (CN)**
• **DU, Zhongyi
Haidian District Beijing 100085 (CN)**

• **ZUO, Jinglong
Haidian District Beijing 100085 (CN)**

(74) Representative: **Robson, Aidan John
Reddie & Grose LLP
The White Chapel Building
10 Whitechapel High Street
London E1 8QS (GB)**

(56) References cited:
**US-A1- 2011 191 849  US-B1- 8 990 928
US-B1- 8 997 228**

• **T Lodderstedt: "RFC 6819 OAuth 2.0 Threat
Model", , 31 January 2013 (2013-01-31), pages
1-71, XP055218399, Retrieved from the Internet:
URL:https://tools.ietf.org/pdf/rfc6819.pdf
[retrieved on 2015-10-06]**

## Description

## FIELD

The present disclosure relates to network security technology filed, and more particularly to a method and a device for detecting website hijacking.

## BACKGROUND

Some network operators monitor a request of a user at intermediate routers when the user accesses to the network, and return a jump response before a target server returns a response when some particular conditions are matched, such that the user jumps to a website having an interest relation with the network operator. The target website corresponding to the jump response may be a phishing website, or may contain Trojans and bounced advertisings, which affects user experience. If the user requests a partner website of a browser, it may do harm to legitimate interests of the browser.

## SUMMARY

Embodiments of the present disclosure provide a method and a device for detecting website hijacking, which include following technical solutions.

According to embodiments of a first aspect of the present disclosure, a method for detecting website hijacking is provided. The method comprises:

obtaining a currently accessed website and a target auto-redirect website from a current website access instruction;
determining a secure auto-redirect website from the currently accessed website according to a history of website access instructions; and
determining whether the target auto-redirect website is hijacked according to the secure auto-redirect website.

In an embodiment, determining a secure auto-redirect website from the currently accessed website according to a history of website access instructions comprises:

obtaining a historical website access instruction corresponding to the currently accessed website from the history of website access instructions; and
determining the secure auto-redirect website from the currently accessed website according to at least one historical website access instruction.

In an embodiment, the historical website access instruction comprises an access website, whether comprising a jump, an auto-redirect website and an access time.
In an embodiment, determining the secure au-

to-redirect website from the currently accessed website according to at least one historical website access instruction comprises:

performing a statistical analysis on the at least one historical website access instruction, and computing an occurrence probability of each auto-redirect website independently; and
determining the secure auto-redirect website from the currently accessed website according to the occurrence probability P of each auto-redirect website and/or the access time.

In an embodiment, determining the secure auto-redirect website from the currently accessed website according to the occurrence probability P of each auto-redirect website and/or the access time comprises:

determining whether an auto-redirect website having the occurrence probability greater than a preset probability threshold exists in the at least one historical website access instruction;
if an auto-redirect website having the occurrence probability greater than a preset probability threshold exists in the at least one historical website access instruction, determining the auto-redirect website having the occurrence probability greater than the preset probability threshold as the secure auto-redirect website; and
if no auto-redirect website having the occurrence probability greater than a preset probability threshold exists in the at least one historical website access instruction, determining each auto-redirect website in the at least one historical website access instruction as the secure auto-redirect website.

In an embodiment, determining the secure auto-redirect website from the currently accessed website according to the occurrence probability P of each auto-redirect website and/or the access time comprises:

determining an auto-redirect website as the secure auto-redirect website, if an access interval from an access time of a last access to the auto-redirect website to a current access time is less than a preset time interval, and a number of continuous occurrences of the auto-redirect website is greater than or equal to a preset number.

In an embodiment, determining the secure auto-redirect website from the currently accessed website according to the occurrence probability P of each auto-redirect website and/or the access time comprises:

determining an auto-redirect website as the secure auto-redirect website, if the occurrence probability P of the auto-redirect website, an access interval T from an access time of a last access to the auto-redirect website to a current access time, a weight M for the occurrence probability P of the auto-redirect website, a weight N for a ratio of the access interval T to a maximum access interval $T_{max}$ and the current access time and a secure jump threshold Q satisfy a formula of

$$P * M + \left(1 - \frac{T}{T_{max}}\right) * N \geq Q$$

.

In an embodiment, determining whether the target auto-redirect website is hijacked according to the secure auto-redirect website comprises:

determining that the target auto-redirect website is not hijacked, if the target auto-redirect website is matched with the secure auto-redirect website; and determining that the target auto-redirect website is hijacked, if the target auto-redirect website is not matched with the secure auto-redirect website.

In an embodiment, the method further comprises: executing an operation of blocking jumping to the target auto-redirect website, after determining that the target auto-redirect website is hijacked.

In an embodiment, the method further comprises:

recording the website access instruction according to a current access time; ranking recorded website access instructions in an ascending order of access time; and determining the history of website access instruction by choosing a preset number of website access instructions from ranked website access instructions, in which each chosen website access instruction has the access time before the current access time, or in which an access interval from the access time of each chosen website access instruction to the current access time is less than or equal to a preset time period.

According to embodiments of a second aspect of the present disclosure, a device for detecting website hijacking is provided. The device comprises:

an obtaining module, configured to obtain a currently accessed website and a target auto-redirect website from a current website access instruction; a first determining module, configured to determine a secure auto-redirect website from the currently accessed website according to a history of website access instructions; and a second determining module, configured to determine whether the target auto-redirect website is hijacked according to the secure auto-redirect website.

In an embodiment, the first determining module comprises:

an obtaining sub-module, configured to obtain a historical website access instruction corresponding to the currently accessed website from the history of website access instructions; and a website determining sub-module, configured to determine the secure auto-redirect website from the currently accessed website according to at least one historical website access instruction.

In an embodiment, the historical website access instruction comprises an access website, whether comprising a jump, an auto-redirect website and an access time.

In an embodiment, the website determining sub-module is configured to:

perform a statistical analysis on the at least one historical website access instruction, and compute an occurrence probability of each auto-redirect website independently; and determine the secure auto-redirect website from the currently accessed website according to the occurrence probability P of each auto-redirect website and/or the access time.

In an embodiment, the website determining sub-module is further configured to:

determine whether an auto-redirect website having the occurrence probability greater than a preset probability threshold exists in the at least one historical website access instruction; if an auto-redirect website having the occurrence probability greater than a preset probability threshold exists in the at least one historical website access instruction, determine the auto-redirect website having the occurrence probability greater than the preset probability threshold as the secure auto-redirect website; and if no auto-redirect website having the occurrence probability greater than a preset probability threshold exists in the at least one historical website access instruction, determine each auto-redirect website in the at least one historical website access instruction as the secure auto-redirect website.

In an embodiment, the website determining sub-module is further configured to:

determine an auto-redirect website as the secure auto-redirect website, if an access interval from an access time of a last access to the auto-redirect website to a current access time is less than a preset time interval, and a number of continuous occurrences of the auto-redirect website is greater than or equal to a preset number.

In an embodiment, the website determining sub-module is further configured to:

determine an auto-redirect website as the secure auto-redirect website, if the occurrence probability P of the auto-redirect website, an access interval T from an access time of a last access to the auto-redirect website to a current access time, a weight M for the occurrence probability P of the auto-redirect website, a weight N for a ratio of the access interval T to a maximum access interval $T_{max}$ and a secure jump threshold Q satisfy a formula of

$$P*M + \left(1 - \frac{T}{T_{max}}\right) * N \geq Q$$
.

In an embodiment, the second determining module comprises:

a first determining sub-module, configured to determine that the target auto-redirect website is not hijacked, if the target auto-redirect website is matched with the secure auto-redirect website;
a second determining sub-module, configured to determine that the target auto-redirect website is hijacked, if the target auto-redirect website is not matched with the secure auto-redirect website.

In an embodiment, the device further comprises: an executing module, configured to execute an operation of blocking jumping to the target auto-redirect website, after determining that the target auto-redirect website is hijacked.

In an embodiment, the device further comprises:

a recording module, configured to record the website access instruction according to a current access time;
a ranking module, configured to rank recorded website access instructions in an ascending order of access time; and
a choosing module, configured to determine the history of website access instruction by choosing a preset number of website access instructions from ranked website access instructions, in which each chosen website access instruction has the access time before the current access time, or in which an access interval from the access time of each chosen website access instruction to the current access time is less than or equal to a preset time period.

According to embodiments of a third aspect of the present disclosure, a device for detecting website hijacking is provided. The device comprises:

a processor; and
a memory, configured to store instructions executable by the processor,
wherein, the processor is configured to:

obtain a currently accessed website and a target auto-redirect website from a current website access instruction;
determine a secure auto-redirect website from the currently accessed website according to a history of website access instructions; and
determine whether the target auto-redirect website is hijacked according to the secure auto-redirect website.

The method and device provided in embodiments of the present disclosure may have following beneficial effects.

(1) In an embodiment, a currently accessed website and a target auto-redirect website are obtained from a website access instruction, a secure auto-redirect website from the currently accessed website is determined according to a history of website access instructions, and it is determined whether the target auto-redirect website is hijacked according to the secure auto-redirect website. With the present disclosure, the secure auto-redirect website is determined according to historical website access instructions, such that whether the target auto-redirect website is hijacked is determined according to the secure auto-redirect website. In this way, abnormal jumps may be detected immediately, and hijackings may be found without maintaining and issuing blacklisted websites in advance, thus enhancing a recognition rate of hijacked websites, and reducing a cost.
(2) In another embodiment, determining a secure auto-redirect website from the currently accessed website according to a history of website access instructions comprises: obtaining a historical website access instruction corresponding to the currently accessed website from the history of website access instructions; and determining the secure auto-redirect website from the currently accessed website according to at least one historical website access instruction. With the present disclosure, the secure auto-redirect website is determined according to the historical website access instruction corresponding to the currently accessed website, such that it is determined whether the target auto-redirect website is hijacked according to the secure auto-redirect website. In this way, abnormal jumps may be detected immediately, and hijackings may be found without maintaining and issuing blacklisted websites in advance, thus enhancing a recognition rate of hijacked websites, and reducing a cost.

(3) In another embodiment, the historical website access instruction comprises an access website, whether comprising a jump, an auto-redirect website and an access time. With the present disclosure, the historical website access instruction comprises an access website, whether comprising a jump, an auto-redirect website and an access time, such that the secure auto-redirect website is determined according to the access website, whether comprising a jump, the auto-redirect website and the access time, thus ensuring the security of website jumping.

(4) In another embodiment, determining the secure auto-redirect website from the currently accessed website according to at least one historical website access instruction comprises: performing a statistical analysis on the at least one historical website access instruction, and computing an occurrence probability of each auto-redirect website independently; and determining the secure auto-redirect website from the currently accessed website according to the occurrence probability P of each auto-redirect website and/or the access time. With the present disclosure, the secure auto-redirect website may be determined quickly according to the occurrence probability of each auto-redirect website, the access time or both of them, such that the determined secure auto-redirect website may be more accurate, thus further ensuring the security of website jumping, enhancing the recognition rate of the hijacked websites, and reducing the cost.

(5) In an embodiment, determining the secure auto-redirect website from the currently accessed website according to the occurrence probability P of each auto-redirect website and/or the access time comprises: determining whether an auto-redirect website having the occurrence probability greater than a preset probability threshold exists in the at least one historical website access instruction; if an auto-redirect website having the occurrence probability greater than a preset probability threshold exists in the at least one historical website access instruction, determining the auto-redirect website having the occurrence probability greater than the preset probability threshold as the secure auto-redirect website; and if no auto-redirect website having the occurrence probability greater than a preset probability threshold exists in the at least one historical website access instruction, determining each auto-redirect website in the at least one historical website access instruction as the secure auto-redirect website. With the present disclosure, if the historical website access instructions contain auto-redirect websites, each having the occurrence probability greater than the preset probability threshold, these auto-redirect websites, each having the occurrence probability greater than the preset probability threshold, are determined as the secure auto-redirect websites, thus ensuring the accuracy of the secure auto-redirect websites. Moreover, if the historical website access instructions do not contain an auto-redirect website having the occurrence probability greater than the preset probability threshold, it indicates that a probability distribution of the historical website access instructions is dispersive, and thus all the auto-redirect websites in the historical website access instructions may be temporarily regarded as secure.

(6) In another embodiment, determining the secure auto-redirect website from the currently accessed website according to the occurrence probability P of each auto-redirect website and/or the access time comprises: determining an auto-redirect website as the secure auto-redirect website, if an access interval T from an access time of a last access to the auto-redirect website to a current access time is less than a preset time interval, and a number of continuous occurrences of the auto-redirect website is greater than or equal to a preset number. In the present disclosure, an auto-redirect website may be regarded as secure, if the number of continuous occurrences of the auto-redirect website is greater than or equal to the preset number, and the access interval T from the access time of the last access to the auto-redirect website to the current access time is less than the preset time interval.

(7) In another embodiment, determining the secure auto-redirect website from the currently accessed website according to the occurrence probability P of each auto-redirect website and/or the access time comprises: determining an auto-redirect website as the secure auto-redirect website, if the occurrence probability P of the auto-redirect website, an access interval T from an access time of a last access to the auto-redirect website to the current access time, a weight M for the occurrence probability P of the auto-redirect website, a weight N for a ratio of the access interval T to a maximum access interval $T_{max}$ and a secure jump threshold Q satisfy a formula of

$$P*M+\left(1-\frac{T}{T_{max}}\right)*N \geq Q$$

With the present disclosure, the secure auto-redirect websites may be determined according to both the occurrence probability of the auto-redirect website and the access time, such that the determined secure auto-redirect website may be more accurate, thus further ensuring the security of website jumping, enhancing the recognition rate of the hijacked websites, and reducing the cost.

(8) In another embodiment, determining whether the target auto-redirect website is hijacked according to the secure auto-redirect website comprises: determining that the target auto-redirect website is not hijacked, if the target auto-redirect website is matched with the secure auto-redirect website; and determining that the target auto-redirect website is hijacked, if the target auto-redirect website is not matched with the secure auto-redirect website. With the present disclosure, the secure auto-redirect website is determined according to historical website access instructions, such that whether the target auto-redirect website is hijacked is determined according to the secure auto-redirect website. In this way, abnormal jumps may be detected immediately, and hijackings may be found without maintaining and issuing blacklisted websites in advance, thus enhancing the recognition rate of hijacked websites, and reducing the cost.

(9) In an embodiment, the method further comprises: executing an operation of blocking jumping to the target auto-redirect website, after determining that the target auto-redirect website is hijacked. In the present disclosure, an operation of blocking jumping to the target auto-redirect website may comprise one or more of outputting a warning message for prompting the user, switching to https, and using a proxy server. Certainly, other operations of blocking jumping to the target auto-redirect website may be included. In this way, the security of the network may be ensured.

(10) In an embodiment, the method further comprises: recording the website access instruction according to a current access time; ranking recorded website access instructions in an ascending order of access time; and determining the history of website access instruction by choosing a preset number of website access instructions from ranked website access instructions, in which each chosen website access instruction has the access time before the current access time, or in which an access interval from the access time of each chosen website access instruction to the current access time is less than or equal to a preset time period. With the present disclosure, website access instructions satisfying the access time requirement or the preset number of website access instructions are chosen from all the website access instructions as the history of website access instruction, and then historical website access instructions corresponding to the currently accessed website are found from the history of website access instruction, such that the historical website access will be updated as the current access time changes, and thus the secure auto-redirect website will be corrected, which ensures the determined secure auto-redirect website more accurate, i.e., ensures determining the hijacked website more accurately. Moreover, the user does not need to maintain and update the network backlist in real time, thus reducing the operation of the user, and enhancing the user experience.

It should be understood that, the above general description and following detail description are exemplary and explanatory, and shall not be construed to limit the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart of a method for detecting website hijacking according to an example embodiment of the present disclosure.
Fig. 2 is a flow chart of a method for detecting website hijacking according to an example embodiment of the present disclosure.
Fig. 3 is a flow chart of step S202 in a method for detecting website hijacking according to an example embodiment of the present disclosure.
Fig. 4 is a flow chart of step S302 in a method for detecting website hijacking according to an example embodiment of the present disclosure.
Fig. 5 is a flow chart of step S302 in another method for detecting website hijacking according to an example embodiment of the present disclosure.
Fig. 6 is a flow chart of step S302 in yet another method for detecting website hijacking according to an example embodiment of the present disclosure.
Fig. 7 is a flow chart of step S103 in a method for detecting website hijacking according to an example embodiment of the present disclosure.
Fig. 8 is a flow chart of still yet another method for detecting website hijacking according to an example embodiment of the present disclosure.
Fig. 9 is a flow chart of yet another method for detecting website hijacking according to an example embodiment of the present disclosure.
Fig. 10 is a block diagram of a device for detecting website hijacking according to an example embodiment of the present disclosure.
Fig. 11 is a block diagram of a first determining module in a device for detecting website hijacking according to an example embodiment of the present disclosure.
Fig. 12 is a block diagram of a second determining module in a device for detecting website hijacking according to an example embodiment of the present disclosure.
Fig. 13 is a block diagram of a device for detecting website hijacking according to an example embodiment of the present disclosure.
Fig. 14 is a block diagram of another device for detecting website hijacking according to an example embodiment of the present disclosure.
Fig. 15 is a schematic diagram of a device applicable for detecting website hijacking according to an example embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

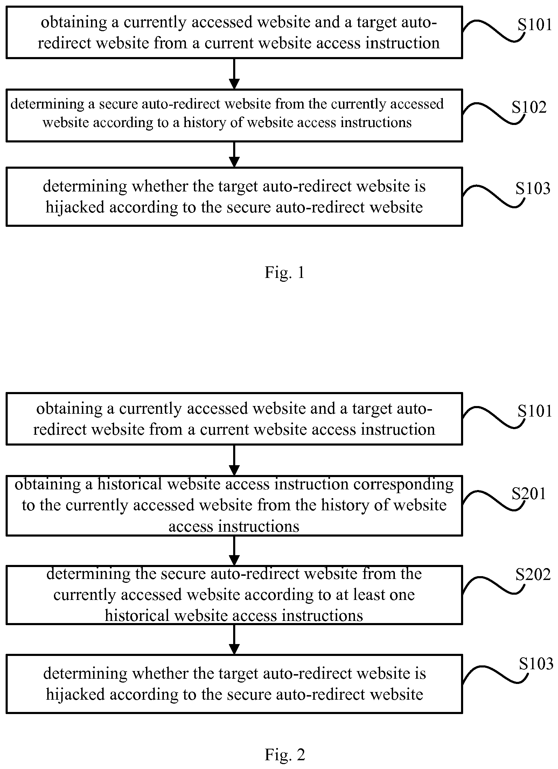

Embodiments of the present disclosure provide a method for detecting website hijacking, which may be applied in terminal equipment, for example, terminal equipment having a website access function, such as a mobile phone, a computer, a digital broadcasting terminal, a message transceiver, a game console, a tablet device, a medical equipment, a fitness equipment and a personal digital assistant. As shown in Fig. 1, the method includes steps S101-S103.

In step S101, a currently accessed website and a target auto-redirect website are obtained from a current website access instruction.

In step S102, a secure auto-redirect website from the currently accessed website is determined according to a history of website access instructions.

In an embodiment, a historical website access instruction comprises an access website, whether comprising a jump, an auto-redirect website and an access time.

In step S103, it is determined whether the target auto-redirect website is hijacked according to the secure auto-redirect website.

In this embodiment, the secure auto-redirect website is determined according to the historical website access instructions, such that whether the target auto-redirect website is hijacked is determined according to the secure auto-redirect website. In this way, abnormal jump may be detected immediately, and hijackings may be found without maintaining and issuing blacklisted websites in advance, thus enhancing a recognition rate of hijacked websites, and reducing a cost.

As shown in Fig. 2, in an embodiment, the above step S102 includes steps S201-S202.

In step S201, a historical website access instruction corresponding to the currently accessed website is obtained from the history of website access instructions. The historical website access instruction corresponding to the currently accessed website may be the historical website access instruction whose access website is the currently accessed website, or whose auto-redirect website is the target auto-redirect website, in the history of website access instructions.

In step S202, the secure auto-redirect website from the currently accessed website is determined according to at least one historical website access instruction.

In this embodiment, the secure auto-redirect website is determined according to the historical website access instruction corresponding to the currently accessed website, such that whether the target auto-redirect website is hijacked is determined according to the secure auto-redirect website. In this way, abnormal jumps may be detected immediately, and hijackings may be found without maintaining and issuing blacklisted websites in advance, thus enhancing the recognition rate of hijacked websites, and reducing the cost.

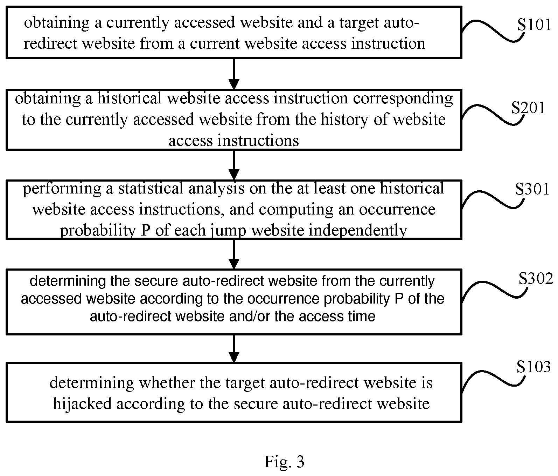

As shown in Fig. 3, in an embodiment, the above step S202 includes steps S301-S302.

In step S301, a statistical analysis is performed on the at least one historical website access instruction, and an occurrence probability of each auto-redirect website is computed independently. The probability corresponding to the obtained at least one historical website access instruction is 1, a probability of each auto-redirect website in all auto-redirect websites may be computed, thus determining the secure auto-redirect website.

In step S302, the secure auto-redirect website from the currently accessed website is determined according to the occurrence probability P of each auto-redirect website and/or the access time.

In this embodiment, the secure auto-redirect website is determined according to the occurrence probability of the auto-redirect website, the access time or both of them, such that the determined secure auto-redirect website may be more accurate, thus further ensuring the security of website jumping, enhancing the recognition rate of hijacked websites, and reducing the cost.

The above step S302 may be implemented in following ways.

Way 1

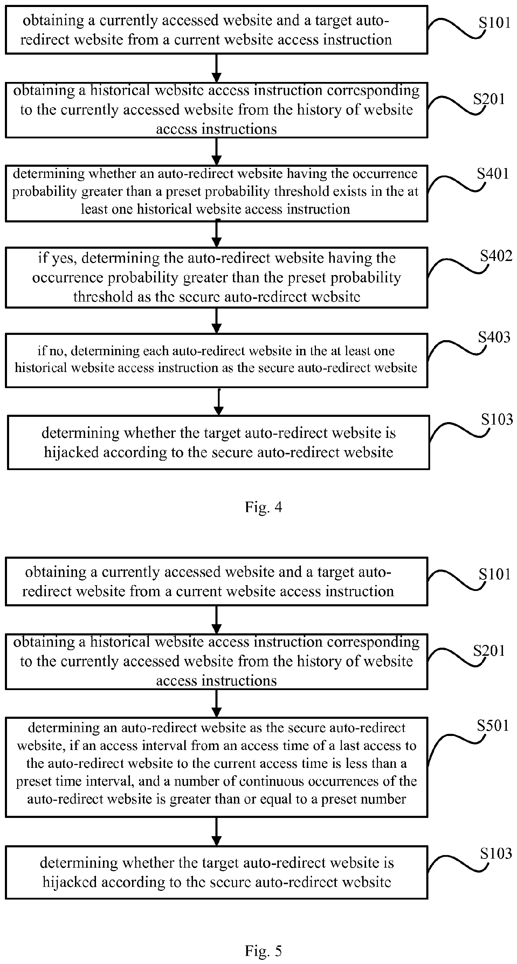

As shown in Fig. 4, in an embodiment, the above step S302 includes steps S401-S403.

In step S401, it is determined whether an auto-redirect website having the occurrence probability greater than a preset probability threshold exists in the at least one historical website access instruction.

In step S402, if the determining result is positive, the auto-redirect website having the occurrence probability greater than the preset probability threshold is determined as the secure auto-redirect website.

In step S403, if the determining result is negative, each auto-redirect website in the at least one historical website access instruction is determined as the secure auto-redirect website.

In this embodiment, if the historical website access instructions contain auto-redirect websites, each having the occurrence probability greater than the preset probability threshold, these auto-redirect websites, each having the occurrence probability greater than the preset probability threshold, are determined as the secure auto-redirect websites, thus ensuring the accuracy of the secure auto-redirect websites. Moreover, if the historical website access instructions does not contain an auto-redirect website having the occurrence probability greater than the preset probability threshold, it indicates that a probability distribution of the historical website access instructions is dispersive, and thus all the auto-redirect websites in the historical website access instructions may be temporally regards as secure. In this way, the determined secure auto-redirect website may be more accurate, thus further ensuring the security of website jumping, enhancing the recognition rate of hijacked websites, and reducing the cost.

For example, there are ten historical website access instructions corresponding to the currently accessed website, and the preset probability threshold is 0.5. If there are two different auto-redirect websites for these ten historical website access instructions (one is auto-redirect website 1, and the other one is auto-redirect website 2), the occurrence probability of auto-redirect website 1 is 0.6, and the occurrence probability of auto-redirect website 2 is 0.4, then the auto-redirect website 1 may be determined as the secure auto-redirect website, since the occurrence probability 0.6 of auto-redirect website 1 is greater than the preset probability threshold 0.5. If there are four different auto-redirect websites (auto-redirect website 1, auto-redirect website 2, auto-redirect website 3, and auto-redirect website 4) for these ten historical website access instructions, the probability of auto-redirect website 1 is 0.2, the probability of auto-redirect website 2 is 0.3, the probability of auto-redirect website 3 is 0.2, and the probability of auto-redirect website 4 is 0.3, then each of these four auto-redirect websites may be determined as the secure auto-redirect website, since the probability of each auto-redirect website is less than the preset probability threshold 0.5.

Way 2

As shown in Fig. 5, in an embodiment, the above step S302 further includes step S501.
In step S501, an auto-redirect website is determined as the secure auto-redirect website, if an access interval from an access time of a last access to the auto-redirect website to a current access time is less than a preset time interval, and a number of continuous occurrences of the auto-redirect website is greater than or equal to a preset number.
In this embodiment, if the number of continuous occurrences of the auto-redirect website is greater than or equal to the preset number, and the access interval from the access time of the last access to the auto-redirect website to the current access time is less than the preset time interval, then the auto-redirect website may be regarded as secure.
For example, if a certain auto-redirect website

appears $N_1$ times continuously, and the access interval from the access time of the last access to the auto-redirect website to the current access time is less than the preset time interval, in which $N_1 > 2$, and the preset time interval may be less than or equal to one day. For example, if the access time of the last access to the auto-redirect website is less than one day apart from the current access time, and the auto-redirect website appears three times continuously, then the auto-redirect website is may be regarded as secure.

Way 3

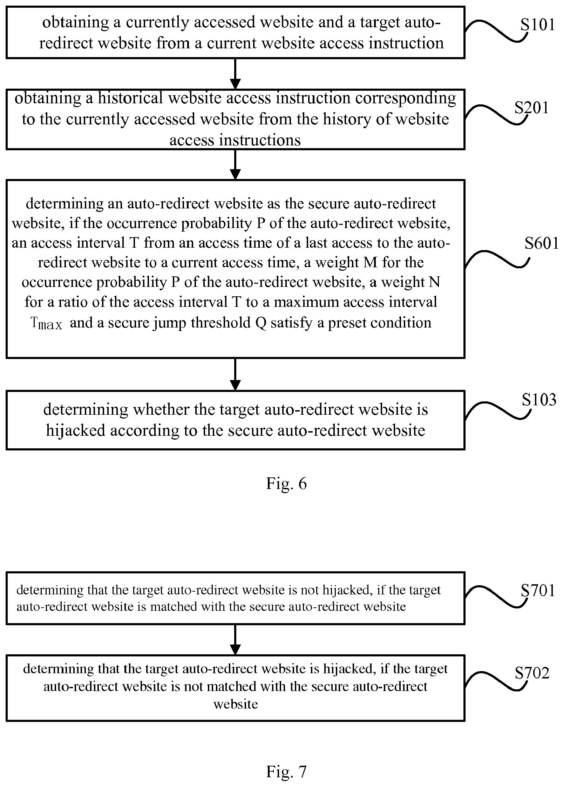

As shown in Fig. 6, in an embodiment, the above step S302 further includes step S601.
In step S601, an auto-redirect website is determined as the secure auto-redirect website, if the occurrence probability P of the auto-redirect website, an access interval T from an access time of a last access to the auto-redirect website to a current access time, a weight M for the occurrence probability P of the auto-redirect website, a weight N for a ratio of the access interval T to a maximum access interval $T_{max}$ and a secure jump threshold Q satisfy a formula of

$$P * M + \left(1 - \frac{T}{T_{max}}\right) * N \geq Q$$

.

For example, if the secure jump threshold is 0.5, the occurrence probability of an auto-redirect website is 0.4, the weight M is 0.6, T is 12 hours, $T_{max}$ is 24 hours, the weight N is 0.4, then according to the above formula, 0.5*0.6+(1-12/24) *0.4=0.5, and thus the auto-redirect website may be regarded as the secure auto-redirect website. The larger the occurrence probability of the auto-redirect website is, and the less the access interval is, the more likely the auto-redirect website is determined as the secure auto-redirect website. On the contrary, the smaller the occurrence probability of the auto-redirect website is, and the larger the access interval is, the less likely the auto-redirect website is determined as the secure auto-redirect website.
In this embodiment, the secure auto-redirect website may be determined according to both the occurrence probability of the auto-redirect website and the access time, such that the determined secure auto-redirect website may be more accurate, thus further ensuring the security of website jumping, enhancing the recognition rate of hijacked websites, and reducing the cost.
As shown in Fig. 7, in an embodiment, the above step S103 includes steps S701-S702.
In step S701, if the target auto-redirect website is matched with the secure auto-redirect website, it is determined that the target auto-redirect website is not hijacked.
In step S702, if the target auto-redirect website is not matched with the secure auto-redirect website, it is determined that the target auto-redirect website is hijacked.

In this embodiment, the secure auto-redirect website is determined according to historical website access instructions, such that whether the target auto-redirect website is hijacked is determined according to the secure auto-redirect website. In this way, abnormal jumps may be detected immediately, and hijackings may be found without maintaining and issuing blacklisted websites in advance, thus enhancing the recognition rate of hijacked websites, and reducing the cost.

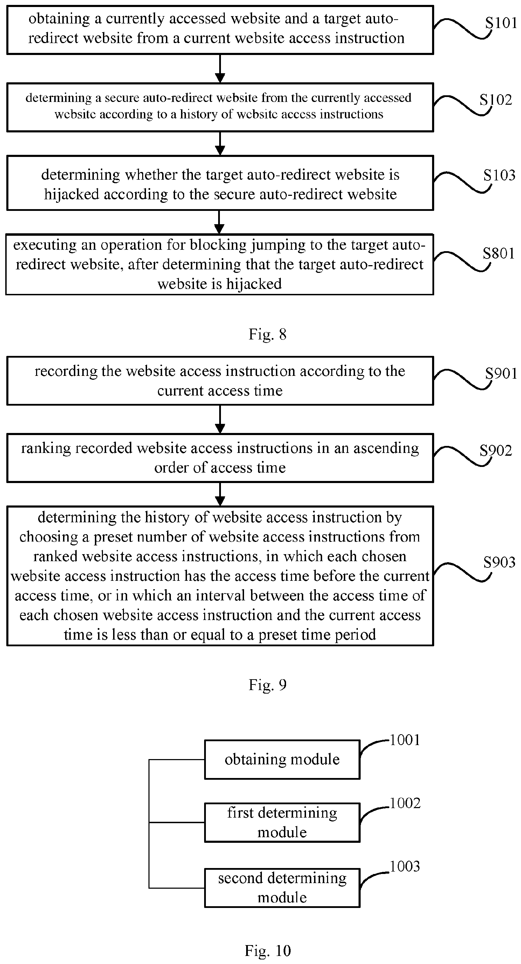

As shown in Fig. 8, in an embodiment, after step S103, the method further comprises step S801.

In step S801, after determining that the target auto-redirect website is hijacked, an operation for blocking jumping to the target auto-redirect website is executed. The operation for blocking jumping to the target auto-redirect website may comprise one or more of outputting a warning message for prompting the user, switching to https, and using a proxy server. Certainly, other operations which may block jumping to the target auto-redirect website may be performed. In this way, it may ensure the security of the network, and avoid jumping to insecure websites such as phishing websites, which brings a network security risk to the user.

As shown in Fig. 9, in an embodiment, before step S101, the above method further includes steps S901-S903.

In step S901, the website access instruction is recorded according to the current access time.

In step S902, recorded website access instructions are ranked in an ascending order of access time.

In step S903, the history of website access instruction is determined by choosing a preset number of website access instructions from ranked website access instructions, in which each chosen website access instruction has the access time before the current access time, or in which an access interval from the access time of each chosen website access instruction to the current access time is less than or equal to a preset time period.

The preset number of website access instructions before the current access time may be a preset number of continuous website access instructions before the current access time, or a preset number of discontinuous website access instructions before the current access time.

In this embodiment, website access instructions satisfying the access time requirement or the preset number of website access instructions are chosen from all the website access instructions as the history of website access instruction, and then historical website access instructions corresponding to the currently accessed website are found from the history of website access instruction, such that the historical website access will be updated as the current access time changes, and thus the secure auto-redirect website will be corrected, which ensures the determined secure auto-redirect website more accurate, i.e., ensures determining the hijacked website more accurately. Moreover, the user does not need to maintain and update the network backlist in real time, thus reducing the operation of the user, and enhancing the user experience.

In the following, device embodiments of the present disclosure are described, which may be used to execute the method embodiments of the present disclosure.

Fig. 10 is a block diagram of a device for detecting website hijacking according to an example embodiment of the present disclosure, which may be implemented as a part of an electronic device or as a whole electronic device via software, hardware or a combination thereof. As shown in Fig. 10, the device for detecting website hijacking comprises an obtaining module 1001, a first determining module 1002 and a second determining module 1003.

The obtaining module 1001 is configured to obtain a currently accessed website and a target auto-redirect website from a current website access instruction.

The first determining module 1002 is configured to determine a secure auto-redirect website from the currently accessed website according to a history of website access instructions. In an embodiment, the historical website access instruction comprises an access website, whether comprising a jump, an auto-redirect website and an access time.

The second determining module 1003 is configured to determine whether the target auto-redirect website is hijacked according to the secure auto-redirect website.

In this embodiment, the secure auto-redirect website is determined according to the historical website access instructions, such that whether the target auto-redirect website is hijacked is determined according to the secure auto-redirect website. In this way, abnormal jump may be detected immediately, and hijackings may be found without maintaining and issuing blacklisted websites in advance, thus enhancing a recognition rate of hijacked websites, and reducing a cost.

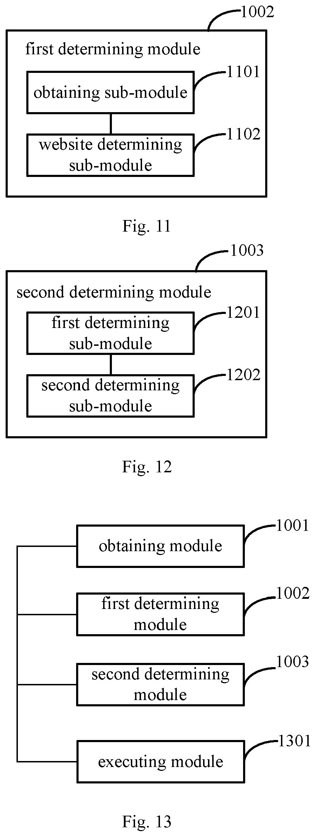

As shown in Fig. 11, in an embodiment, the first determining module 1002 comprises an obtaining sub-module 1101 and a website determining sub-module 1102.

The obtaining sub-module 1101 is configured to obtain a historical website access instruction corresponding to the currently accessed website from the history of website access instructions.

The website determining sub-module 1102 is configured to determine the secure auto-redirect website from the currently accessed website according to at least one historical website access instruction.

In this embodiment, the secure auto-redirect website is determined according to the historical website access instruction corresponding to the currently accessed website, such that whether the target auto-redirect website is hijacked is determined according to the secure auto-redirect website. In this way, abnormal jumps may be detected immediately, and hijackings may be found without maintaining and issuing blacklisted websites in advance, thus enhancing the recognition rate of hijacked websites, and reducing the cost.

In an embodiment, the website determining sub-module 1102 is configured to: perform a statistical analysis on the at least one historical website access instruction, compute an occurrence probability of each auto-redirect website independently, and determine the secure auto-redirect website from the currently accessed website according to the occurrence probability P of each auto-redirect website and/or the access time.

In this embodiment, the secure auto-redirect website is determined according to the occurrence probability of the auto-redirect website, the access time or both of them, such that the determined secure auto-redirect website may be more accurate, thus further ensuring the security of website jumping, enhancing the recognition rate of hijacked websites, and reducing the cost.

In an embodiment, the website determining sub-module 1102 is further configured to: determine whether an auto-redirect website having the occurrence probability greater than a preset probability threshold exists in the at least one historical website access instruction; if an auto-redirect website having the occurrence probability greater than a preset probability threshold exists in the at least one historical website access instruction, determine the auto-redirect website having the occurrence probability greater than the preset probability threshold as the secure auto-redirect website; and if no auto-redirect website having the occurrence probability greater than a preset probability threshold exists in the at least one historical website access instruction, determine each auto-redirect website in the at least one historical website access instruction as the secure auto-redirect website.

In this embodiment, if the historical website access instructions contain auto-redirect websites, each having the occurrence probability greater than the preset probability threshold, these auto-redirect websites, each having the occurrence probability greater than the preset probability threshold, are determined as the secure auto-redirect websites, thus ensuring the accuracy of the secure auto-redirect websites. Moreover, if the historical website access instructions does not contain a auto-redirect website having the occurrence probability greater than the preset probability threshold, it indicates that a probability distribution of the historical website access instructions is dispersive, and thus all the auto-redirect websites in the historical website access instructions may be temporally regards as secure. In this way, the determined secure auto-redirect website may be more accurate, thus further ensuring the security of website jumping, enhancing the recognition rate of hijacked websites, and reducing the cost.

For example, there are ten historical website access instructions corresponding to the currently accessed website, and the preset probability threshold is 0.5. If there are two different auto-redirect websites for these ten historical website access instructions (one is auto-redirect website 1, and the other one is auto-redirect website 2), the occurrence probability of auto-redirect website 1 is 0.6, and the occurrence probability of auto-redirect website 2 is 0.4, then the auto-redirect website 1 may be determined as the secure auto-redirect website, since the occurrence probability 0.6 of auto-redirect website 1 is greater than the preset probability threshold 0.5. If there are four different auto-redirect websites (auto-redirect website 1, auto-redirect website 2, auto-redirect website 3, and auto-redirect website 4) for these ten historical website access instructions, the probability of auto-redirect website 1 is 0.2, the probability of auto-redirect website 2 is 0.3, the probability of auto-redirect website 3 is 0.2, and the probability of auto-redirect website 4 is 0.3, then each of these four auto-redirect websites may be determined as the secure auto-redirect website, since the probability of each auto-redirect website is less than the preset probability threshold 0.5.

In an embodiment, the website determining sub-module is further configured to determine an auto-redirect website as the secure auto-redirect website, if an access interval from an access time of a last access to the auto-redirect website to a current access time is less than a preset time interval, and a number of continuous occurrences of the auto-redirect website is greater than or equal to a preset number.

In this embodiment, if the number of continuous occurrences of the auto-redirect website is greater than or equal to the preset number, and the access interval between the access time of the last access to the auto-redirect website and the current access time is less than the preset time interval, and then the auto-redirect website may be regarded as secure.

For example, if a certain auto-redirect website appears $N_1$ times continuously, and the access interval between the access time of the last access to the auto-redirect website and the current access time is less than the preset time interval, in which $N_1 > 2$, and the preset time interval may be less than or equal to one day. For example, if the access time of the last access to the auto-redirect website is less than one day apart from the current access time, and the auto-redirect website appears three times continuously, then the auto-redirect website may be regarded as secure.

In an embodiment, the website determining sub-module is further configured to determine an auto-redirect website as the secure auto-redirect website, if the occurrence probability P of the auto-redirect website, an access interval T between an access time of a last access to the auto-redirect website and a current access time, a weight M for the occurrence probability P of the auto-redirect website, a weight N for a ratio of the access interval T to a maximum access interval $T_{max}$ and a secure jump threshold Q satisfy a formula of

$$P*M+\left(1-\frac{T}{T_{max}}\right)*N \geq Q$$

For example, if the secure jump threshold is 0.5, the occurrence probability of an auto-redirect website is 0.4, the weight M is 0.6, T is 12 hours, $T_{max}$ is 24 hours, the weight N is 0.4, then according to the above formula, 0.5*0.6+(1-12/24) *0.4=0.5, and thus the auto-redirect website may be regarded as the secure auto-redirect website. The larger the occurrence probability of the auto-redirect website is, and the less the access interval is, the more likely the auto-redirect website is determined as the secure auto-redirect website. On the contrary, the smaller the occurrence probability of the auto-redirect website is, and the larger the access interval is, the less likely the auto-redirect website is determined as the secure auto-redirect website.

In this embodiment, the secure auto-redirect website may be determined according to both the occurrence probability of the auto-redirect website and the access time, such that the determined secure auto-redirect website may be more accurate, thus further ensuring the security of website jumping, enhancing the recognition rate of hijacked websites, and reducing the cost.

As shown in Fig. 12, in an embodiment, the above second determining module 1003 comprises a first determining sub-module 1201 and a second determining sub-module 1202.

The first determining sub-module 1201 is configured to determine that the target auto-redirect website is not hijacked, if the target auto-redirect website is matched with the secure auto-redirect website.

The second determining sub-module 1202 is configured to determine that the target auto-redirect website is hijacked, if the target auto-redirect website is not matched with the secure auto-redirect website.

In this embodiment, the secure auto-redirect website is determined according to historical website access instructions, such that whether the target auto-redirect website is hijacked is determined according to the secure auto-redirect website. In this way, abnormal jumps may be detected immediately, and hijackings may be found without maintaining and issuing blacklisted websites in advance, thus enhancing the recognition rate of hijacked websites, and reducing the cost.

As shown in Fig. 13, in an embodiment, the above device further comprises an executing module 1301.

The executing module 1301 is configured to execute an operation for blocking jumping to the target auto-redirect website, after it is determined that the target auto-redirect website is hijacked.

The operation for blocking jumping to the target auto-redirect website may comprise one or more of outputting a warning message for prompting the user, switching to https, and using a proxy server. Certainly, other operations which may block jumping to the target auto-redirect website may be performed. In this way, it may ensure the security of the network, and avoid jumping to insecure websites such as phishing websites, which brings a network security risk to the user.

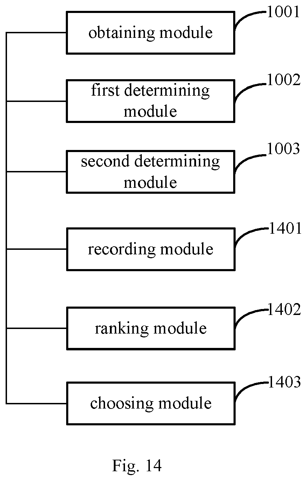

As shown in Fig. 14, in an embodiment, the above device further comprises a recording module 1401, a ranking module 1402 and a choosing module 1403.

The recording module 1401 is configured to record the website access instruction according to the current access time.

The ranking module 1402 is configured to rank recorded website access instructions in an ascending order of access time.

The choosing module 1403 is configured to determine the history of website access instruction by choosing a preset number of website access instructions from ranked website access instructions, in which each chosen website access instruction has the access time before the current access time, or in which an access interval between the access time of each chosen website access instruction and the current access time is less than or equal to a preset time period.

The preset number of website access instructions before the current access time may be a preset number of continuous website access instructions before the current access time, or a preset number of discontinuous website access instructions before the current access time.

In this embodiment, website access instructions satisfying the access time requirement or the preset number of website access instructions or are chosen from all the website access instructions as the history of website access instruction, and then historical website access instructions corresponding to the currently accessed website are found from the history of website access instruction, such that the historical website access will be updated as the current access time changes, and thus the secure auto-redirect website will be corrected, which ensures the determined secure auto-redirect website more accurate, i.e., ensures determining the hijacked website more accurately. Moreover, the user does not need to maintain and update the network backlist in real time, thus reducing the operation of the user, and enhancing the user experience.

According to embodiments of a third aspect of the present disclosure, a device for detecting website hijacking is provided. The device comprises a processor and a memory configured to store instructions executable by the processor, in which the processor is configured to: obtain a currently accessed website and a target auto-redirect website from a current website access instruction; determine a secure auto-redirect website from the currently accessed website according to a history of website access instructions; and determine whether the target auto-redirect website is hijacked according to the secure auto-redirect website.

The above processor may be configured as follows.

Determining a secure auto-redirect website from the currently accessed website according to a history of website access instructions comprises:

obtaining a historical website access instruction corresponding to the currently accessed website from the history of website access instructions; and determining the secure auto-redirect website from the currently accessed website according to at least one historical website access instruction.

The above processor may also be configured as follows.

The historical website access instruction comprises an access website, whether comprising a jump, an auto-redirect website and an access time.

The processor may also be configured as follows.

Determining the secure auto-redirect website from the currently accessed website according to at least one historical website access instruction comprises:

performing a statistical analysis on the at least one historical website access instruction, and computing an occurrence probability of each auto-redirect website independently; and determining the secure auto-redirect website from the currently accessed website according to the occurrence probability P of each auto-redirect website and/or the access time.

The above processor may be configured as follows.

Determining the secure auto-redirect website from the currently accessed website according to the occurrence probability P of each auto-redirect website and/or the access time comprises:

determining whether an auto-redirect website having the occurrence probability greater than a preset probability threshold exists in the at least one historical website access instruction; if an auto-redirect website having the occurrence probability greater than a preset probability threshold exists in the at least one historical website access instruction, determining the auto-redirect website having the occurrence probability greater than the preset probability threshold as the secure auto-redirect website; and if no auto-redirect website having the occurrence probability greater than a preset probability threshold exists in the at least one historical website access instruction, determining each auto-redirect website in the at least one historical website access instruction as the secure auto-redirect website.

The above processor may be configured as follows.

Determining the secure auto-redirect website from the currently accessed website according to the occurrence probability P of each auto-redirect website and/or the access time comprises:

determining an auto-redirect website as the secure auto-redirect website, if an access interval between an access time of a last access to the auto-redirect website and a current access time is less than a preset time interval, and a number of continuous occurrences of the auto-redirect website is greater than or equal to a preset number.

The above processor may also be configured as follows.

Determining the secure auto-redirect website from the currently accessed website according to the occurrence probability P of each auto-redirect website and/or the access time comprises:

determining an auto-redirect website as the secure auto-redirect website, if the occurrence probability P of the auto-redirect website, an access interval T between an access time of a last access to the auto-redirect website and a current access time, a weight M for the occurrence probability P of the auto-redirect website, a weight N for a ratio of the access interval T to a maximum access interval $T_{max}$ and a secure jump threshold Q satisfy a formula of

$$P * M + \left(1 - \frac{T}{T_{max}}\right) * N \geq Q$$

.

The above processor may be configured as follows.

Determining whether the target auto-redirect website is hijacked according to the secure auto-redirect website comprises:

determining that the target auto-redirect website is not hijacked, if the target auto-redirect website is matched with the secure auto-redirect website; and determining that the target auto-redirect website is hijacked, if the target auto-redirect website is not matched with the secure auto-redirect website.

The processor may be further configured as follows.

The method further comprises: executing an operation for blocking jumping to the target auto-redirect website, after determining that the target auto-redirect website is hijacked.

The processor may be further configured as follows.

The method further comprises:

recording the website access instruction according to a current access time;
ranking recorded website access instructions in an ascending order of access time; and
determining the history of website access instruction by choosing a preset number of website access instructions from ranked website access instructions, in which each chosen website access instruction has the access time before the current access time, or in which an access interval between the access time of each chosen website access instruction and the current access time is less than or equal to a preset time period.

With respect to the devices in the above embodiments, the specific operation modes of individual modules therein have been described in detail in the embodiments regarding the method for detecting website hijacking, which will not be elaborated herein.

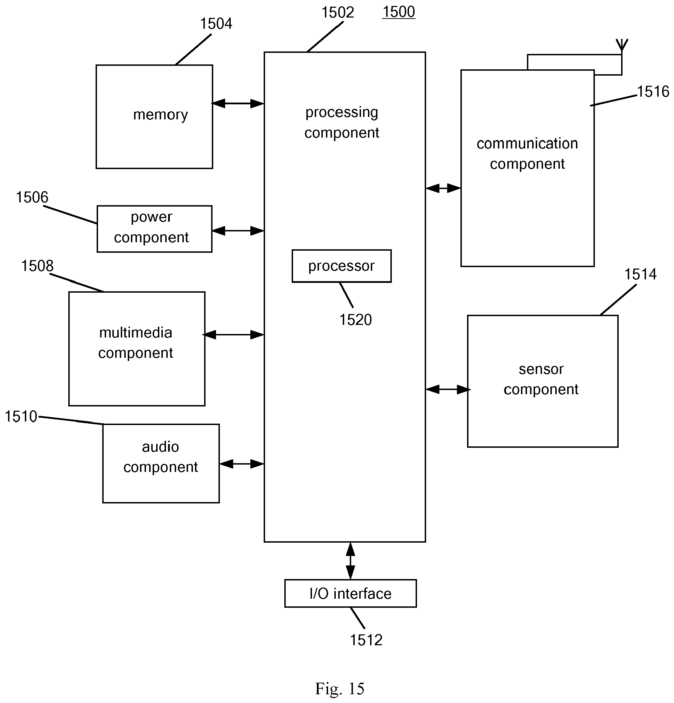

Fig. 15 is a schematic diagram of a device 1500 for detecting website hijacking according to an example embodiment, which is applied in terminal equipment. For example, the device 1500 may be a mobile phone, a computer, a digital broadcasting terminal, a messaging device, a game console, a tablet device, medical equipment, fitness equipment, a Personal Digital Assistant PDA, etc.

Referring to Fig. 15, the device 1500 may comprise the following one or more components: a processing component 1502, a memory 1504, a power component 1506, a multimedia component 1508, an audio component 1510, an Input/Output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may comprise one or more processors 1520 to execute instructions to perform all or part of the steps in the above described methods. Moreover, the processing component 1502 may comprise one or more modules which facilitate the interaction between the processing component 1502 and other components. For instance, the processing component 1502 may comprise a multimedia module to facilitate the interaction between the multimedia component 1508 and the processing component 1502.

The memory 1504 is configured to store various types of data to support the operation of the device 1500. Examples of such data comprise instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may comprise a power management system, one or more power sources, and any other components associated with the generation, management, and distribution of power in the device 1500.

The multimedia component 1508 comprises a screen providing an output interface between the device 1500 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1508 comprises a front camera and/or a rear camera. The front camera and the rear camera may receive external multimedia data while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 comprises a microphone (MIC) configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further comprises a speaker to output audio signals.

The I/O interface 1512 provides an interface for the processing component 1502 and peripheral interface modules, such as a keyboard, a click wheel, buttons, and the like. The buttons may comprise, but are not limited to, a home button, a volume button, a starting button, and a locking button.

The sensor component 1514 comprises one or more sensors to provide status assessments of various aspects of the device 1500. For instance, the sensor component 1514 may detect an open/closed status of the device 1500 and relative positioning of components (e.g. the display and the keypad of the device 1500). The sensor component 1514 may also detect a change in position of the device 1500 or of a component in the device 1500, a presence or absence of user contact with the device 1500, an orientation or an acceleration/deceleration of the device 1500, and a change in temperature of the device 1500. The sensor component 1514 may comprise a proximity sensor configured to detect the presence of nearby objects without any physical contact. The sensor component 1514 may also comprise a light sensor, such as a CMOS or CCD image sensor, for use in imaging applications. In some embodiments, the sensor component 1514 may also comprise an accelerometer sensor, a gyroscope sensor, a magnetic sensor, a pressure sensor, or a temperature sensor.

The communication component 1516 is configured to facilitate wired or wireless communication between the device 1500 and other devices. The device 1500 can access a wireless network based on a communication standard, such as WIFI, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium comprising instructions, such as the memory 1504 comprising instructions. The above instructions are executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium storing instructions, which when executed by the processor of the device 1500, causes the device 1500 to execute the above method for detecting website hijacking, the method comprising:

obtaining a currently accessed website and a target auto-redirect website from a current website access instruction;
determining a secure auto-redirect website from the currently accessed website according to a history of website access instructions; and
determining whether the target auto-redirect website is hijacked according to the secure auto-redirect website.

Determining a secure auto-redirect website from the currently accessed website according to a history of website access instructions comprises:

obtaining a historical website access instruction corresponding to the currently accessed website from the history of website access instructions; and
determining the secure auto-redirect website from the currently accessed website according to at least one historical website access instruction.

The historical website access instruction comprises an access website, whether comprising a jump, an auto-redirect website and an access time.

Determining the secure auto-redirect website from the currently accessed website according to at least one historical website access instruction comprises:

performing a statistical analysis on the at least one historical website access instruction, and computing an occurrence probability of each auto-redirect website independently; and
determining the secure auto-redirect website from the currently accessed website according to the occurrence probability P of each auto-redirect website and/or the access time.

Determining the secure auto-redirect website from the currently accessed website according to the occurrence probability P of each auto-redirect website and/or the access time comprises:

determining whether an auto-redirect website having the occurrence probability greater than a preset probability threshold exists in the at least one historical website access instruction;
if an auto-redirect website having the occurrence probability greater than a preset probability threshold exists in the at least one historical website access instruction, determining the auto-redirect website having the occurrence probability greater than the preset probability threshold as the secure auto-redirect website; and

if no auto-redirect website having the occurrence probability greater than a preset probability threshold exists in the at least one historical website access instruction, determining each auto-redirect website in the at least one historical website access instruction as the secure auto-redirect website.

Determining the secure auto-redirect website from the currently accessed website according to the occurrence probability P of each auto-redirect website and/or the access time comprises:

determining an auto-redirect website as the secure auto-redirect website, if an access interval T between an access time of a last access to the auto-redirect website and a current access time is less than a preset time interval, and a number of continuous occurrences of the auto-redirect website is greater than or equal to a preset number.

Determining the secure auto-redirect website from the currently accessed website according to the occurrence probability P of each auto-redirect website and/or the access time comprises:

determining an auto-redirect website as the secure auto-redirect website, if the occurrence probability P of the auto-redirect website, an access interval T between an access time of a last access to the auto-redirect website and a current access time, a weight M for the occurrence probability P of the auto-redirect website, a weight N for a ratio of the access interval T to a maximum access interval $T_{max}$ and a secure jump threshold Q satisfy a formula of

$$ P*M + \left(1 - \frac{T}{T_{max}}\right)*N \ge Q $$

.

In an embodiment, determining whether the target auto-redirect website is hijacked according to the secure auto-redirect website comprises:

determining that the target auto-redirect website is not hijacked, if the target auto-redirect website is matched with the secure auto-redirect website; and determining that the target auto-redirect website is hijacked, if the target auto-redirect website is not matched with the secure auto-redirect website.

The method further comprises executing an operation for blocking jumping to the target auto-redirect website, after determining that the target auto-redirect website is hijacked.
The method further comprises:

recording the website access instruction according to a current access time; ranking recorded website access instructions in an ascending order of access time; and determining the history of website access instruction by choosing a preset number of website access instructions from ranked website access instructions, in which each chosen website access instruction has the access time before the current access time, or in which an access interval between the access time of each chosen website access instruction and the current access time is less than or equal to a preset time period.

Other embodiments of the invention will be apparent to those skilled in the art from consideration of the specification and practice of the invention disclosed here. This application is intended to cover any variations, uses, or adaptations of the invention following the general principles thereof and comprising such departures from the present disclosure as come within known or customary practice in the art.

## Claims

1. A method for detecting website hijacking, comprising:

obtaining a currently accessed website and a target auto-redirect website from a current website access instruction; determining a secure auto-redirect website from the currently accessed website according to a history of website access instructions; and determining whether the target auto-redirect website is hijacked according to the secure auto-redirect website, wherein determining the secure auto-redirect website comprises:

obtaining a historical website access instruction corresponding to the currently accessed website from the history of website access instructions; wherein the historical website access instruction comprises an access website, an auto-redirect website, and an access time; **characterized in that** statistical analysis is performed on the at least one historical website access instruction, computing an occurrence probability P of each auto-redirect website independently; wherein the secure auto-redirect website is determined according to the occurrence probability P of each auto-redirect website and/or the access time.

2. The method according to claim 1, wherein determining the secure auto-redirect website from the currently accessed website according to the occurrence probability P of each auto-redirect website and/or the access time comprises:

determining whether an auto-redirect website having the occurrence probability greater than a preset probability threshold exists in the at least one historical website access instruction; if an auto-redirect website having the occurrence probability greater than a preset probability threshold exists in the at least one historical website access instruction, determining the auto-redirect website having the occurrence probability greater than the preset probability threshold as the secure auto-redirect website; and

if no auto-redirect website having the occurrence probability greater than a preset probability threshold exists in the at least one historical website access instruction, determining each auto-redirect website in the at least one historical website access instruction as the secure auto-redirect website.

3. The method according to claim 1, wherein determining the secure auto-redirect website from the currently accessed website according to the occurrence probability P of each auto-redirect website and/or the access time comprises:

determining an auto-redirect website as the secure auto-redirect website, if an access interval T from an access time of a last access to the auto-redirect website to a current access time is less than a preset time interval, and a number of continuous occurrences of the auto-redirect website is greater than or equal to a preset number.

4. The method according to claim 1, wherein determining the secure auto-redirect website from the currently accessed website according to the occurrence probability P of each auto-redirect website and/or the access time comprises:

determining an auto-redirect website as the secure auto-redirect website, if the occurrence probability P of the auto-redirect website, an access interval T from an access time of a last access to the auto-redirect website to a current access time, a weight M for the occurrence probability P of the auto-redirect website, a weight N for a ratio of the access interval T to a maximum access interval $T_{max}$ and a secure jump threshold Q satisfy a formula of

$$P * M + \left(1 - \frac{T}{T_{max}}\right) * N \geq Q$$

.

5. The method according to claim 1, wherein determining whether the target auto-redirect website is hijacked according to the secure auto-redirect website comprises:

determining that the target auto-redirect website is not hijacked, if the target auto-redirect website is matched with the secure auto-redirect website; and
determining that the target auto-redirect website is hijacked, if the target auto-redirect website is not matched with the secure auto-redirect website.

6. The method according to claim 1, further comprising:

executing an operation for blocking jumping to the target auto-redirect website, after determining that the target auto-redirect website is hijacked.

7. The method according to claim 1, further comprising:

recording the website access instruction according to a current access time;
ranking recorded website access instructions in an ascending order of access time; and
determining the history of website access instruction by choosing a preset number of website access instructions from ranked website access instructions, in which each chosen website access instruction has the access time before the current access time, or in which an access interval from the access time of each chosen website access instruction to the current access time is less than or equal to a preset time period.

8. A device for detecting website hijacking, comprising:

an obtaining module (1001), configured to obtain a currently accessed website and a target auto-redirect website from a current website access instruction;
a first determining module (1002), configured to determine a secure auto-redirect website from the currently accessed website according to a history of website access instructions; and
a second determining module (1003), configured to determine whether the target auto-redirect website is hijacked according to the secure auto-redirect website, wherein determining the secure auto-redirect website comprises:

obtaining a historical website access instruction corresponding to the currently accessed website from the history of website access instructions;
wherein the historical website access instruction comprises an access website, an auto-redirect website, and an access time; **characterized in that** statistical analysis is performed on the at least one historical website access instruction, computing an occurrence probability P of each auto-redirect website independently;
wherein the secure auto-redirect website is determined according to the occurrence probability P of each auto-redirect website and/or the access time.

9. The device according to claim 8, wherein the first determining module (1002) comprises:

an obtaining sub-module (1101), configured to obtain a historical website access instruction corresponding to the currently accessed website from the history of website access instructions; and

a website determining sub-module (1102), configured to determine the secure auto-redirect website from the currently accessed website according to at least one historical website access instruction.

10. The device according to claim 9, wherein the historical website access instruction comprises an access website, whether comprising a jump, an auto-redirect website and an access time,

wherein, the website determining sub-module (1102) is configured to:

perform a statistical analysis on the at least one historical website access instruction, and compute an occurrence probability of each auto-redirect website; and

determine the secure auto-redirect website from the currently accessed website according to the occurrence probability P of each auto-redirect website and/or the access time,

especially, wherein the website determining sub-module is further configured to:

determine whether an auto-redirect website having the occurrence probability greater than a preset probability threshold exists in the at least one historical website access instruction;

if yes, determine the auto-redirect website having the occurrence probability greater than the preset probability threshold as the secure auto-redirect website; and

if no, determine each auto-redirect website in the at least one historical website access instruction as the secure auto-redirect website,

especially, wherein the website determining sub-module is further configured to:

determine an auto-redirect website as the secure auto-redirect website, if an interval T between an access time of a last access to the auto-redirect website and a current access time is less than a preset time interval, and a number of continuous occurrences of the auto-redirect website is greater than or equal to a preset number,

especially, wherein the website determining sub-module is further configured to:

determine an auto-redirect website as the secure auto-redirect website, if the occurrence probability P of the auto-redirect website, an interval T between an access time of a last access to the auto-redirect website and a current access time, a weight M for the occurrence probability P of the auto-redirect website, a weight N for a ratio of the interval T to a maximum interval $T_{max}$ and a secure jump threshold Q satisfy a formula of

$$P*M+\left(1-\frac{T}{T_{max}}\right)*N\geq Q$$ .

11. The device according to claim 8, further comprising:

an executing module (1301), configured to execute an operation for blocking jumping to the target auto-redirect website, after determining that the target auto-redirect website is hijacked.

12. The device according to claim 8, further comprising:

a recording module (1401), configured to record the website access instruction according to a current access time;

a ranking module (1402), configured to rank recorded website access instructions in an order of access time from far to close; and

a choosing module (1403), configured to determine the history of website access instruction by choosing a preset number of website access instructions from ranked website access instructions, in which each chosen website access instruction has the access time before the current access time, or in which an interval between the access time of each chosen website access instruction and the current access time is less than or equal to a preset time period.

**Patentansprüche**

1. Verfahren zum Erkennen von Website-Hijacking, umfassend:

Beschaffen einer Website, auf die aktuell zugegriffen wird, und einer Automatische-Umleitung-Ziel-Website aus einer aktuellen Website-Zugriffsanweisung;
Bestimmen einer sicheren Automatische-Umleitung-Website anhand der Website, auf die aktuell zugegriffen wird, gemäß einer Historie von Website-Zugriffsanweisungen und

Bestimmen, ob die Automatische-Umleitung-Ziel-Website geändert wurde, gemäß der sicheren Automatische-Umleitung-Website, wobei das Bestimmen der sicheren Automatische-Umleitung-Website Folgendes aufweist:

Beschaffen einer historischen Website-Zugriffsanweisung, die der Website, auf die aktuell zugegriffen wird, entspricht, aus der Historie von Website-Zugriffsanweisungen; wobei die historische Website-Zugriffsanweisung eine Zugriffs-Website, eine Automatische-Umleitung-Website und eine Zugriffszeit umfasst; **dadurch gekennzeichnet, dass** an der wenigsten einen historischen Website-Zugriffsanweisung eine statistische Analyse durchgeführt wird, wobei eine Auftretenswahrscheinlichkeit P jeder Automatische-Umleitung-Website unabhängig berechnet wird; wobei die sichere Automatische-Umleitung-Website gemäß der Auftretenswahrscheinlichkeit P jeder Automatische-Umleitung-Website und/oder der Zugriffszeit bestimmt wird.

2. Verfahren nach Anspruch 1, wobei das Bestimmen der sicheren Automatische-Umleitung-Website anhand der Website, auf die aktuell zugegriffen wird, gemäß der Auftretenswahrscheinlichkeit P jeder Automatische-Umleitung-Website und/oder der Zugriffszeit Folgendes aufweist:

Bestimmen, ob eine Automatische-Umleitung-Website mit der Auftretenswahrscheinlichkeit von mehr als einer vorgegebenen Wahrscheinlichkeitsschwelle in der wenigstens einen historischen Website-Zugriffsanweisung besteht; wenn eine Automatische-Umleitung-Website mit der Auftretenswahrscheinlichkeit von mehr als einer vorgegebenen Wahrscheinlichkeitsschwelle in der wenigstens einen historischen Website-Zugriffsanweisung besteht, Bestimmen der Automatische-Umleitung-Website mit der Auftretenswahrscheinlichkeit von mehr als der vorgegebenen Wahrscheinlichkeitsschwelle als die sichere Automatische-Umleitung-Website und, wenn keine Automatische-Umleitung-Website mit der Auftretenswahrscheinlichkeit von mehr als einer vorgegebenen Wahrscheinlichkeitsschwelle in der wenigstens einen historischen Website-Zugriffsanweisung besteht, Bestimmen jeder Automatische-Umleitung-Website in der wenigstens einen historischen Website-Zugriffsanweisung als die sichere Automatische-Umleitung-Website.

3. Verfahren nach Anspruch 1, wobei das Bestimmen der sicheren Automatische-Umleitung-Website anhand der Website, auf die aktuell zugegriffen wird, gemäß der Auftretenswahrscheinlichkeit P jeder Automatische-Umleitung-Website und/oder der Zugriffszeit Folgendes aufweist:

Bestimmen einer Automatische-Umleitung-Website als die sichere Automatische-Umleitung-Website, wenn ein Zugriffsintervall T von einer Zugriffszeit eines letzten Zugriffs auf die Automatische-Umleitung-Website bis zu einer aktuellen Zugriffszeit kleiner als ein vorgegebenes Zeitintervall ist und eine Häufigkeit des kontinuierlichen Auftretens der Automatische-Umleitung-Website größer oder gleich einer vorgegebenen Zahl ist.

4. Verfahren nach Anspruch 1, wobei das Bestimmen der sicheren Automatische-Umleitung-Website anhand der Website, auf die aktuell zugegriffen wird, gemäß der Auftretenswahrscheinlichkeit P jeder Automatische-Umleitung-Website und/oder der Zugriffszeit Folgendes aufweist:

Bestimmen einer Automatische-Umleitung-Website als die sichere Automatische-Umleitung-Website, wenn die Auftretenswahrscheinlichkeit P der Automatische-Umleitung-Website, ein Zugriffsintervall T von einer Zugriffszeit eines letzten Zugriffs auf die Automatische-Umleitung-Website bis zu einer aktuellen Zugriffszeit, ein Gewicht M für die Auftretenswahrscheinlichkeit P der Automatische-Umleitung-Website, ein Gewicht N für ein Verhältnis des Zugriffsintervalls T zu einem maximalen Zugriffsintervall $T_{max}$ und ein Sicherer-Sprung-Schwellenwert Q eine folgende Formel erfüllen:

$$P*M+\left(1-\frac{T}{T_{max}}\right)*N \geq Q$$

5. Verfahren nach Anspruch 1, wobei das Bestimmen, ob die Ziel-Automatische-Umleitung-Website geändert wurde, gemäß der sicheren Automatische-Umleitung-Website Folgendes aufweist:

Bestimmen, dass die Ziel-Automatische-Umleitung-Website nicht geändert wurde, wenn die Ziel-Automatische-Umleitung-Website mit der sicheren Automatische-Umleitung-Website übereinstimmt; und Bestimmen, dass die Ziel-Automatische-Umleitung-Website geändert wurde, wenn die Ziel-Automatische-Umleitung-Website nicht mit der sicheren Automatische-Umleitung-Website übereinstimmt.

6. Verfahren nach Anspruch 1, das ferner aufweist:

Ausführen einer Operation zum Sperren des Springens auf die Ziel-Automatische-Umleitung-Website nach dem Bestimmen, dass die Ziel-Automatische-Umleitung-Website geändert wurde.

7. Verfahren nach Anspruch 1, das ferner aufweist:

Aufzeichnen der Website-Zugriffsanweisung gemäß einer aktuellen Zugriffszeit; Einstufen aufgezeichneter Website-Zugriffsanweisungen in aufsteigender Zugriffszeit-Reihenfolge und Bestimmen der Historie der Website-Zugriffsanweisung durch Wählen einer vorgegebenen Zahl von Website-Zugriffsanweisungen aus eingestuften Website-Zugriffsanweisungen, bei denen jede gewählte Website-Zugriffsanweisung die Zugriffszeit vor der aktuellen Zugriffszeit hat oder bei denen ein Zugriffsintervall von der Zugriffszeit jeder gewählten Website-Zugriffsanweisung bis zur aktuellen Website-Zugriffszeit kleiner oder gleich einer vorgegebenen Zeitspanne ist.

8. Vorrichtung zur Erkennung von Website-Hijacking, umfassend:

ein Beschaffungsmodul (1001), das zum Beschaffen einer Website, auf die aktuell zugegriffen wird, und einer Automatische-Umleitung-Ziel-Website aus einer aktuellen Website-Zugriffsanweisung konfiguriert ist; ein erstes Bestimmungsmodul (1002), das zum Bestimmen einer sicheren Automatische-Umleitung-Website anhand der Website, auf die aktuell zugegriffen wird, gemäß einer Historie von Website-Zugriffsanweisungen konfiguriert ist; und ein zweites Bestimmungsmodul (1003), das zum Bestimmen, ob die Automatische-Umleitung-Ziel-Website geändert wurde, gemäß der sicheren Automatische-Umleitung-Website, wobei das Bestimmen der sicheren Automatische-Umleitung-Website Folgendes aufweist:

Beschaffen einer historischen Website-Zugriffsanweisung, die der Website, auf die aktuell zugegriffen wird, entspricht, aus der Historie von Website-Zugriffsanweisungen; wobei die historische Website-Zugriffsanweisung eine Zugriffs-Website, eine Automatische-Umleitung-Website und eine Zugriffszeit umfasst;

**dadurch gekennzeichnet, dass** an der wenigsten einen historischen Website-Zugriffsanweisung eine statistische Analyse durchgeführt wird, wobei eine Auftretenswahrscheinlichkeit P jeder Automatische-Umleitung-Website unabhängig berechnet wird; wobei die sichere Automatische-Umleitung-Website gemäß der Auftretenswahrscheinlichkeit P jeder Automatische-Umleitung-Website und/oder der Zugriffszeit bestimmt wird.

9. Vorrichtung nach Anspruch 8, wobei das erste Bestimmungsmodul (1002) umfasst:

ein Beschaffungsuntermodul (1101), das zum Beschaffen einer historischen Website-Zugriffsanweisung, die der Website, auf die aktuell zugegriffen wird, entspricht, aus der Historie von Website-Zugriffsanweisungen konfiguriert ist; und ein Website-Bestimmungsuntermodul (1102), das zum Bestimmen der sicheren Automatische-Umleitung-Website anhand der Website, auf die aktuell zugegriffen wird, gemäß wenigstens einer historischen Website-Zugriffsanweisung konfiguriert ist.

10. Vorrichtung nach Anspruch 8, wobei die historische Website-Zugriffsanweisung eine Zugriffs-Website aufweist, die eines von einem Sprung, einer Automatische-Umleitung-Website und einer Zugriffszeit umfasst, wobei das Website-Bestimmungsuntermodul (1102) konfiguriert ist zum:

Durchführen einer statistischen Analyse an der wenigsten einen historischen Website-Zugriffsanweisung und Berechnen einer Auftretenswahrscheinlichkeit P jeder Automatische-Umleitung-Website und Bestimmen der sicheren Automatische-Umleitung-Website anhand der Website, auf die aktuell zugegriffen wird, gemäß der Auftretenswahrscheinlichkeit P jeder Automatische-Umleitung-Website und/oder der Zugriffszeit, insbesondere wobei das Website-Bestimmungsuntermodul ferner konfiguriert ist zum:

Bestimmen, ob eine Automatische-Umleitung-Website mit der Auftretenswahrscheinlichkeit von mehr als einer vorgegebenen Wahrscheinlichkeitsschwelle in der wenigstens einen historischen Website-Zugriffsanweisung besteht;

wenn ja, Bestimmen der Automatische-Umleitung-Website mit der Auftretenswahrscheinlichkeit von mehr als der vorgegebenen Wahrscheinlichkeitsschwelle als die sichere Automatische-Umleitung-Website und,

wenn nein, Bestimmen jeder Automatische-Umleitung-Website in der wenigstens einen historischen Website-Zugriffsanweisung als die sichere Automatische-Umleitung-Website,

insbesondere wobei das Website-Bestimmungsuntermodul ferner konfiguriert ist zum:

Bestimmen einer Automatische-Umleitung-Website als die sichere Automatische-Umleitung-Website, wenn ein Intervall T zwischen einer Zugriffszeit eines letzten Zugriffs auf die Automatische-Umleitung-Website und einer aktuellen Zugriffszeit kleiner als ein vorgegebenes Zeitintervall ist und eine Häufigkeit des kontinuierlichen Auftretens der Automatische-Umleitung-Website größer oder gleich einer vorgegebenen Zahl ist,

insbesondere wobei das Website-Bestimmungsuntermodul ferner konfiguriert ist zum:

Bestimmen einer Automatische-Umleitung-Website als die sichere Automatische-Umleitung-Website, wenn die Auftretenswahrscheinlichkeit P der Automatische-Umleitung-Website, ein Zugriffsintervall T zwischen einer Zugriffszeit eines letzten Zugriffs auf die Automatische-Umleitung-Website und einer aktuellen Zugriffszeit, ein Gewicht M für die Auftretenswahrscheinlichkeit P der Automatische-Umleitung-Website, ein Gewicht N für ein Verhältnis des Zugriffsintervalls T zu einem maximalen Zugriffsintervall $T_{max}$ und ein Sicherer-Sprung-Schwellenwert Q eine folgende Formel erfüllen:

$$P * M + \left(1 - \frac{T}{T_{max}}\right) * N \geq Q$$

**11.** Vorrichtung nach Anspruch 8, die ferner aufweist:

ein Ausführungsmodul (1301), das zum Ausführen einer Operation zum Sperren des Springens auf die Ziel-Automatische-Umleitung-Website nach dem Bestimmen, dass die Ziel-Automatische-Umleitung-Website geändert wurde, konfiguriert ist.

**12.** Vorrichtung nach Anspruch 8, die ferner aufweist:

ein Aufzeichnungsmodul (1401), das zum Aufzeichnen der Website-Zugriffsanweisung gemäß einer aktuellen Zugriffszeit konfiguriert ist;
ein Einstufungsmodul (1402), das zum Einstufen aufgezeichneter Website-Zugriffsanweisungen in einer Reihenfolge der Zugriffszeit von fern bis nahe konfiguriert ist; und
ein Wählmodul (1403), das zum Bestimmen der Historie der Website-Zugriffsanweisung durch Wählen einer vorgegebenen Zahl von Website-Zugriffsanweisungen aus eingestuften Website-Zugriffsanweisungen, bei denen jede gewählte Website-Zugriffsanweisung die Zugriffszeit vor der aktuellen Zugriffszeit hat oder bei denen ein Intervall zwischen der Zugriffszeit jeder gewählten Website-Zugriffsanweisung und der aktuellen Website-Zugriffszeit kleiner oder gleich einer vorgegebenen Zeitspanne ist.

**Revendications**

**1.** Procédé de détection d'un détournement de site Web, comprenant :

l'obtention d'un site Web présentement consulté et d'un site Web à redirection automatique cible à partir d'une instruction de consultation de site Web actuelle ;
la détermination d'un site Web à redirection automatique sécurisé à partir du site Web présentement consulté en fonction d'un historique d'instructions de consultation de site Web ; et
la détermination que le site Web à redirection automatique cible est détourné d'après le site Web à redirection automatique sécurisé, dans lequel la détermination d'un site Web à redirection automatique sécurisé comprend :

l'obtention d'une instruction de consultation de site Web historique correspondant au site Web présentement consulté à partir de l'historique d'instructions de consultation de site Web ;
dans lequel l'instruction de consultation de site Web historique comprend un site Web de consultation, un site Web à redirection automatique et un temps de consultation ;
**caractérisé en ce qu'**une analyse statistique est exécutée sur l'au moins une instruction de consultation de site Web historique, en calculant une probabilité d'occurrence P de chaque site Web à redirection automatique indépendamment ;

dans lequel le site Web à redirection automatique sécurisé est déterminé en fonction de la probabilité d'occurrence P de chaque site Web à redirection automatique et/ou du temps de consultation.

2. Procédé selon la revendication 1, dans lequel la détermination du site Web à redirection automatique sécurisé à partir du site Web présentement consulté en fonction de la probabilité d'occurrence P de chaque site Web à redirection automatique et/ou du temps de consultation comprend :

la détermination qu'un site Web à redirection automatique ayant une probabilité d'occurrence supérieure à un seuil de probabilité prédéfini existe ou non dans l'au moins une instruction de consultation de site Web historique ;

si un site Web à redirection automatique ayant une probabilité d'occurrence supérieure à un seuil de probabilité prédéfini existe dans l'au moins une instruction de consultation de site Web historique, la détermination du site Web à redirection automatique ayant une probabilité d'occurrence supérieure au seuil de probabilité prédéfini comme étant le site Web à redirection automatique sécurisé ; et

si aucun site Web à redirection automatique ayant une probabilité d'occurrence supérieure à un seuil de probabilité prédéfini n'existe dans l'au moins une instruction de consultation de site Web historique, la détermination de chaque site Web à redirection automatique dans l'au moins une instruction de consultation de site Web historique comme étant le site Web à redirection automatique sécurisé.

3. Procédé selon la revendication 1, dans lequel la détermination du site Web à redirection automatique sécurisé à partir du site Web présentement consulté en fonction de la probabilité d'occurrence P de chaque site Web à redirection automatique et/ou du temps de consultation comprend :

la détermination d'un site Web à redirection automatique comme étant le site Web à redirection automatique sécurisé, si un intervalle de consultation T à compter d'un temps de consultation d'une dernière consultation du site Web à redirection automatique jusqu'à un temps de consultation actuel est inférieur ou non à un intervalle de temps prédéfini, et qu'un nombre d'occurrences continues du site Web à redirection automatique est supérieur ou égal à un nombre prédéfini.

4. Procédé selon la revendication 1, dans lequel la détermination du site Web à redirection automatique sécurisé à partir du site Web présentement consulté en fonction de la probabilité d'occurrence P de chaque site Web à redirection automatique et/ou du temps de consultation comprend :

la détermination d'un site Web à redirection automatique comme étant le site Web à redirection automatique sécurisé, si la probabilité d'occurrence P du site Web à redirection automatique, un intervalle de consultation T à compter d'un temps de consultation d'une dernière consultation du site Web à redirection automatique jusqu'à un temps de consultation actuel, un poids M de la probabilité d'occurrence P du site Web à redirection automatique, un poids N d'un rapport de l'intervalle de consultation T sur un intervalle de consultation maximum $T_{max}$ et un seuil de saut sécurisé Q satisfont la formule suivante

$$P * M + \left(1 - \frac{T}{T_{max}}\right) * N \geq Q$$

5. Procédé selon la revendication 1, dans lequel la détermination que le site Web à redirection automatique cible est détourné d'après le site Web à redirection automatique sécurisé comprend :

la détermination que le site Web à redirection automatique cible n'est pas détourné, si le site Web à redirection automatique cible correspond au site Web à redirection automatique sécurisé ; et

la détermination que le site Web à redirection automatique cible est détourné, si le site Web à redirection automatique cible ne correspond pas au site Web à redirection automatique sécurisé.

6. Procédé selon la revendication 1, comprenant en outre :

l'exécution d'une opération de blocage du saut au site Web à redirection automatique cible, après la détermination que le site Web à redirection automatique cible est détourné.

7. Procédé selon la revendication 1, comprenant en outre :

l'enregistrement de l'instruction de consultation de site Web conformément à un temps de consultation actuel ;

le classement des instructions de consultation de site Web enregistrées dans un ordre croissant des temps de consultation ; et

la détermination de l'historique des instructions de consultation de site Web en sélectionnant un nombre prédéfini d'instructions de consultation de site Web parmi les instructions de consultation de site Web classées, dans lequel chaque instruction de consultation de site Web sélectionnée a le temps de consultation avant le temps de consultation actuel, ou dans lequel un intervalle de consultation à compter du temps de consultation de chaque instruction de consultation de site Web sélectionnée jusqu'au temps de consultation actuel est inférieur ou égal à une période de temps prédéfinie.

**8.** Dispositif de détection d'un détournement de site Web, comprenant:

un module d'obtention (1001), configuré pour obtenir un site Web présentement consulté et un site Web à redirection automatique cible à partir d'une instruction de consultation de site Web actuelle ;

un premier module de détermination (1002), configuré pour déterminer un site Web à redirection automatique sécurisé à partir du site Web présentement consulté en fonction d'un historique d'instructions de consultation de sites Web ; et

un second module de détermination (1003), configuré pour déterminer que le site Web à redirection automatique cible est détourné d'après le site Web à redirection automatique sécurisé, dans lequel la détermination du site Web à redirection automatique sécurisé comprend :

l'obtention d'une instruction de consultation de site Web historique correspondant au site Web présentement consulté à partir de l'historique d'instructions de consultation de sites Web ;

dans lequel l'instruction de consultation de site Web historique comprend un site Web de consultation, un site Web à redirection automatique et un temps de consultation ; **caractérisé en ce qu'**une analyse statistique est exécutée sur l'au moins une instruction de consultation de site Web historique, en calculant une probabilité d'occurrence P de chaque site Web à redirection automatique indépendamment ;

dans lequel le site Web à redirection automatique sécurisé est déterminé en fonction de la probabilité d'occurrence P de chaque site Web à redirection automatique et/ou du temps de consultation.

**9.** Dispositif selon la revendication 8, dans lequel le premier module de détermination (1002) comprend:

un sous-module d'obtention (1101), configuré pour obtenir une instruction de consultation de site Web historique correspondant au site Web présentement consulté à partir de l'historique d'instructions de consultation de sites Web ; et un sous-module de détermination de site Web (1102), configuré pour déterminer le site Web à redirection automatique sécurisé à partir du site Web présentement consulté en fonction d'au moins une instruction de consultation de site Web historique.

**10.** Dispositif selon la revendication 9, dans lequel l'instruction de consultation de site Web historique comprend un site Web de consultation, qu'il comprenne un saut, un site Web à redirection automatique et un temps de consultation, dans lequel, le sous-module de détermination de site Web (1102) est configuré pour :

effectuer une analyse statistique sur l'au moins une instruction de consultation de site Web historique, et calculer une probabilité d'occurrence de chaque site Web à redirection automatique ; et

déterminer le site Web à redirection automatique sécurisé à partir du site Web présentement consulté en fonction de la probabilité d'occurrence P de chaque site Web à redirection automatique et/ou du temps de consultation, spécialement, dans lequel le sous-module de détermination de site Web est configuré pour:

déterminer qu'un site Web à redirection automatique ayant une probabilité d'occurrence supérieure à un seuil de probabilité prédéfini existe ou non dans l'au moins une instruction de consultation de site Web historique ;

dans l'affirmative, déterminer le site Web à redirection automatique ayant une probabilité d'occurrence supérieure au seuil de probabilité prédéfini comme étant le site Web à redirection automatique sécurisé ; et

dans la négative, déterminer chaque site Web à redirection automatique dans l'au moins une instruction de consultation de site Web historique comme étant le site Web à redirection automatique sécurisé, spécialement, dans lequel le sous-module de détermination de site Web est configuré en outre pour :

déterminer un site Web à redirection automatique comme étant le site Web à redirection automatique sécurisé, si un intervalle T entre un temps de consultation d'une dernière consultation du site Web à redirection automatique et un temps de consultation actuel est inférieur à un intervalle de temps prédéfini, et un nombre d'occurrences continues du site Web à redirection automatique est supérieur ou égal à un nombre prédéfini,

spécialement, dans lequel le sous-module de détermination de site Web est configuré en outre pour :

déterminer un site Web à redirection automatique comme étant le site Web à redirection automatique sécurisé, si la probabilité d'occurrence P du site Web à redirection automatique, un intervalle T entre le temps de consultation d'une dernière consultation du site Web à redirection automatique et un temps de consultation actuel, un poids M de la probabilité d'occurrence P du site Web à redirection automatique, un poids N d'un rapport de l'intervalle T sur un intervalle maximum $T_{max}$ et un seuil de saut sécurisé Q satisfont la formule suivante

$$P * M + \left(1 - \frac{T}{T_{max}}\right) * N \geq Q$$

**11.** Dispositif selon la revendication 8, comprenant en outre:

un module d'exécution (1301), configuré pour exécuter une opération de blocage du saut au site Web à redirection automatique cible, après la détermination que le site Web à redirection automatique cible est détourné.

**12.** Dispositif selon la revendication 8, comprenant en outre :

un module d'enregistrement (1401), configuré pour enregistrer l'instruction de consultation de site Web conformément à un temps de consultation actuel ;
un module de classement (1402), configuré pour classer les instructions de consultation de site Web enregistrées dans un ordre croissant de la plus lointaine à la plus proche ; et
un module de sélection (1403), configuré pour déterminer l'historique des instructions de consultation de site Web en sélectionnant un nombre prédéfini d'instructions de consultation de site Web parmi les instructions de consultation de site Web classées, dans lequel chaque instruction de consultation de site Web sélectionnée a le temps de consultation avant le temps de consultation actuel, ou dans lequel un intervalle entre le temps de consultation de chaque instruction de consultation de site Web sélectionnée et le temps de consultation actuel est inférieur ou égal à une période de temps prédéfinie.

obtaining a currently accessed website and a target auto-redirect website from a current website access instruction — S101

↓

determining a secure auto-redirect website from the currently accessed website according to a history of website access instructions — S102

↓

determining whether the target auto-redirect website is hijacked according to the secure auto-redirect website — S103

Fig. 1

obtaining a currently accessed website and a target auto-redirect website from a current website access instruction — S101

↓

obtaining a historical website access instruction corresponding to the currently accessed website from the history of website access instructions — S201

↓

determining the secure auto-redirect website from the currently accessed website according to at least one historical website access instructions — S202

↓

determining whether the target auto-redirect website is hijacked according to the secure auto-redirect website — S103

Fig. 2

obtaining a currently accessed website and a target auto-redirect website from a current website access instruction ⟩ S101

obtaining a historical website access instruction corresponding to the currently accessed website from the history of website access instructions ⟩ S201

performing a statistical analysis on the at least one historical website access instructions, and computing an occurrence probability P of each jump website independently ⟩ S301

determining the secure auto-redirect website from the currently accessed website according to the occurrence probability P of the auto-redirect website and/or the access time ⟩ S302

determining whether the target auto-redirect website is hijacked according to the secure auto-redirect website ⟩ S103

Fig. 3

obtaining a currently accessed website and a target auto-redirect website from a current website access instruction — S101

obtaining a historical website access instruction corresponding to the currently accessed website from the history of website access instructions — S201

determining whether an auto-redirect website having the occurrence probability greater than a preset probability threshold exists in the at least one historical website access instruction — S401

if yes, determining the auto-redirect website having the occurrence probability greater than the preset probability threshold as the secure auto-redirect website — S402

if no, determining each auto-redirect website in the at least one historical website access instruction as the secure auto-redirect website — S403

determining whether the target auto-redirect website is hijacked according to the secure auto-redirect website — S103

Fig. 4

obtaining a currently accessed website and a target auto-redirect website from a current website access instruction — S101

obtaining a historical website access instruction corresponding to the currently accessed website from the history of website access instructions — S201

determining an auto-redirect website as the secure auto-redirect website, if an access interval from an access time of a last access to the auto-redirect website to the current access time is less than a preset time interval, and a number of continuous occurrences of the auto-redirect website is greater than or equal to a preset number — S501

determining whether the target auto-redirect website is hijacked according to the secure auto-redirect website — S103

Fig. 5

obtaining a currently accessed website and a target auto-redirect website from a current website access instruction     S101

obtaining a historical website access instruction corresponding to the currently accessed website from the history of website access instructions     S201

determining an auto-redirect website as the secure auto-redirect website, if the occurrence probability P of the auto-redirect website, an access interval T from an access time of a last access to the auto-redirect website to a current access time, a weight M for the occurrence probability P of the auto-redirect website, a weight N for a ratio of the access interval T to a maximum access interval $T_{max}$ and a secure jump threshold Q satisfy a preset condition     S601

determining whether the target auto-redirect website is hijacked according to the secure auto-redirect website     S103

Fig. 6

determining that the target auto-redirect website is not hijacked, if the target auto-redirect website is matched with the secure auto-redirect website     S701

determining that the target auto-redirect website is hijacked, if the target auto-redirect website is not matched with the secure auto-redirect website     S702

Fig. 7

obtaining a currently accessed website and a target auto-redirect website from a current website access instruction ⟩ S101

determining a secure auto-redirect website from the currently accessed website according to a history of website access instructions ⟩ S102

determining whether the target auto-redirect website is hijacked according to the secure auto-redirect website ⟩ S103

executing an operation for blocking jumping to the target auto-redirect website, after determining that the target auto-redirect website is hijacked ⟩ S801

Fig. 8

recording the website access instruction according to the current access time ⟩ S901

ranking recorded website access instructions in an ascending order of access time ⟩ S902

determining the history of website access instruction by choosing a preset number of website access instructions from ranked website access instructions, in which each chosen website access instruction has the access time before the current access time, or in which an interval between the access time of each chosen website access instruction and the current access time is less than or equal to a preset time period ⟩ S903

Fig. 9

obtaining module ⟩ 1001

first determining module ⟩ 1002

second determining module ⟩ 1003

Fig. 10

Fig. 11

Fig. 12

Fig. 13

obtaining module ~1001

first determining module ~1002

second determining module ~1003

recording module ~1401

ranking module ~1402

choosing module ~1403

Fig. 14

1504     1502    1500

memory

processing
component

communication
component

1516

1506

power
component

1508

processor

multimedia
component

1520

sensor
component

1514

1510

audio
component

I/O interface

1512

Fig. 15